# EUROPEAN PATENT SPECIFICATION

(11) **EP 1 441 142 B1**
(45) Date of publication and mention of the grant of the patent: **17.12.2008**
(21) Application number: 04250341.7
(22) Date of filing: 22.01.2004
(51) Int. Cl.: F16D 65/18, F16D 65/14, F16D 65/56

(54) **Force transmission device for a disc brake**
Vorrichtung zur Kraftübertragung für eine Scheibenbremse
Dispositif de transmission de force pour un frein à disque

(30) Priority: 25.01.2003 GB 0301798
(43) Date of publication of application: 28.07.2004
(73) Proprietor: Meritor Heavy Vehicle Braking Systems (UK) Limited, Cwmbran, Gwent NP44 3XU (GB)
(72) Inventor: Heinlein, Carl Edward, Shropshire TF13 6NL (GB)
(74) Representative: Foot, Paul Matthew James

(56) References cited:
- EP-A- 0 852 301
- US-B1- 6 269 914
- US-B1- 6 435 319

## Description

The present invention relates to a disc brake caliper for a disc brake. The present invention further relates to a disc brake incorporating a disc brake caliper.

Force transmission devices of disc brakes, particularly air actuated disc brakes, are mounted within a caliper of the brake and transmit the actuation force from the actuator to friction elements of the brake via tappets or pistons. Typically, force transmission devices also incorporate an adjuster mechanism to compensate for wear of the friction elements in use.

A number of problems have been identified with known force transmission devices. For example, a high number of metal to metal sliding surfaces in such devices reduces efficiency, the machining necessary to provide a close fit between tappet shafts and housings of such devices is relatively costly to carry out, and often seals are located in close proximity to the rear of the friction element and may be damaged in extreme high temperature applications. Furthermore, since tappet heads of such devices are individual components, they must be securely attached to tappet shafts, usually by means of a retaining ring or circlip, thus increasing the part count. Additionally, although cast iron backplates for friction elements are becoming commonplace in the commercial vehicle market, there is a high cost associated with the machining of the backplate of friction elements to ensure that it is flat and thus that the load from the force transmission device is adequately distributed over the backplate.

The present invention seeks to overcome, or at least mitigate, the problems of the prior art.

Accordingly, one aspect of the present invention provides a disc brake caliper comprising a housing and a force transmission device for a disc brake operable to move a friction element of the brake into engagement with a rotary brake disc along a first axis in response to a loading from a thrust member, the device being restrained from movement transverse to the first axis proximate a first end engageable with the thrust member, characterised in that the device is guided only by the housing at the first end, and in that a second end is engageable with the friction element.

Embodiments of the present invention will now be described, by way of example only, with reference to the accompanying drawings, in which:
FIGURE 1 is a cross-sectional view through a portion of a prior art disc brake incorporating a prior art force transmission device;
FIGURE 2 is an exploded perspective view of a prior art friction element and a portion of the force transmission device;
FIGURE 3 is a cross-sectional view through a disc brake incorporating a force transmission device according to one embodiment of the present invention;
FIGURE 4 is an exploded perspective view of a portion of the force transmission device and a friction element;
FIGURE 5 is a cross-sectional view of the backplate of the friction element of Figure 4; and
FIGURES 6 to 8 illustrate an alternative method of securing a tappet and backplate.

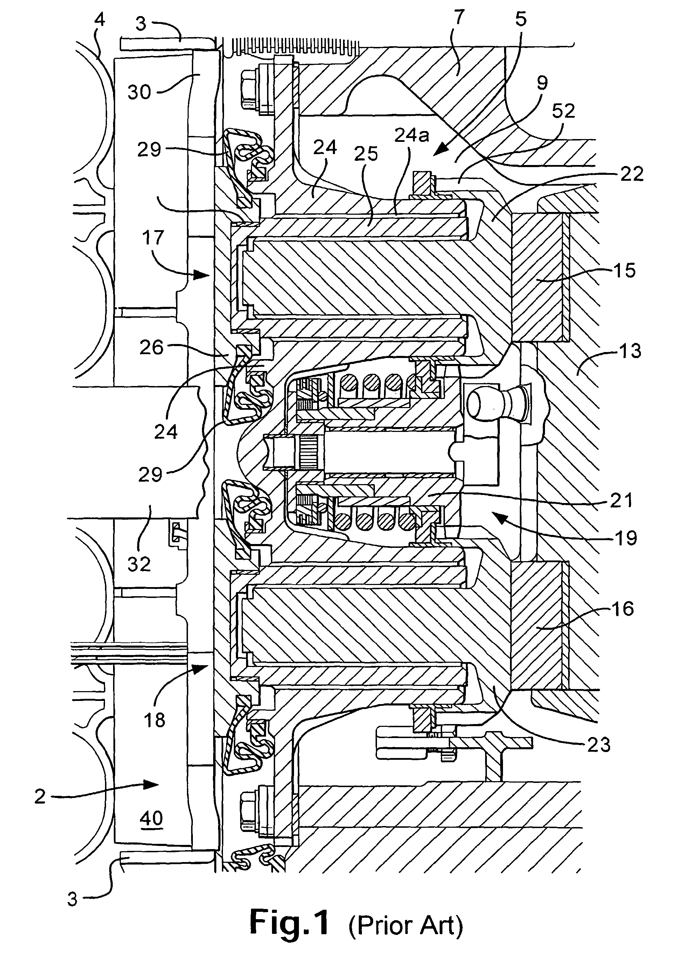

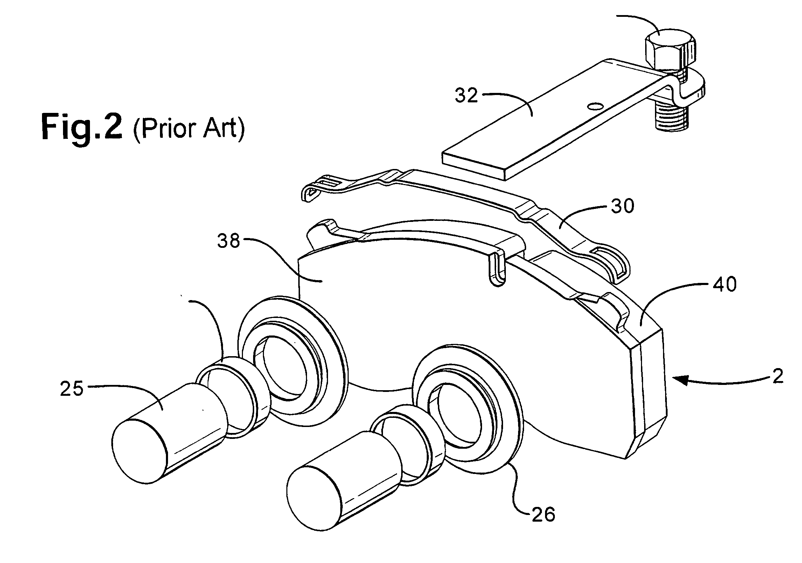

A prior art force transmission device 5 is illustrated in Figures 1 and 2. Briefly, the device is mounted within a chamber 9 of a housing 7 of a disc brake caliper. The housing 7 is adapted to mount a conventional air or other power actuator (not shown) on an external face thereof. An actuating lever (not shown) may perform an angular reciprocal swinging movement under the action of a thrust member of the power actuator, the lever being integral or attached to a rotary actuating member 13 which is rotatably supported within the caliper. The member 13 is recessed to house respective cylindrical rollers 15, 16, the axes of which are offset from the rotary axis of the actuating member 13 and form an eccentric actuating arrangement, with the rollers 15 and 16 bearing against respective thrust assemblies, shown as adjustable tappet assemblies, and indicated generally at 17 and 18 of the force transmission device 5.

Rotation of the lever and its connected member 13 causes actuating thrust to be applied via tappet assemblies 17 and 18 to a directly actuated friction element 2 and, by reaction via the caliper, to an indirectly actuated friction element (not shown). The friction elements are mounted so as to face respective sides of a brake disc or rotor 4. The friction elements are received within openings in a brake carrier 3 fixed to a non-rotatable portion of a vehicle (eg the suspension) to which the brake is mounted, the friction elements are thus restrained from circumferential and radial inward movement. Radial outward movement is restricted by pad springs 30 and a pad strap 32, as is well known.

An adjuster assembly is indicated generally at 19 and may be of any appropriate conventional type needing no detailed description. The adjuster responds to excessive movement of the friction element 2 (eg due to wear of friction material 40 in use) and produces resultant rotation of an adjuster shaft 21 via gear 52 which in turn rotates a pair of adjuster shafts 22 and 23 of the adjustable tappet assemblies 17 and 18.

The tappet assemblies 17 and 18 are of identical construction and operation. Thus only assembly 17 is described in greater detail. This assembly comprises a tappet housing 24 comprising a trilobular bush 24A. A tappet head 26 is mounted to a closed end portion of a tappet shaft 25 having a trilobular external surface which is received in the bush 24A so as to be axially guided by the bush. The tappet shaft 25 further has a threaded internal bore arranged to receive adjuster shaft 22 having a corresponding external thread. The tappet assemblies 17 and 18 are disposed with tappet heads 26 thereof adjacent to the friction element 2.

When force is applied by the brake actuator from the right in Figure 1, the entire tappet assembly slides along bore 24A to transmit the braking force to the friction element 2 via tappet head 26. Because the friction element 2 is able to move radially outwardly and circumferentially to a certain extent, there may be some relative movement between tappet head 26 and the friction element in operation. To adjust the length of the tappet, adjuster shaft 22 is rotated so as to cause relative axial movement between the adjuster shaft and the piston shaft 25 by virtue of the action of their mating threads. The trilobular configuration of the outer surface of the tappet shaft 25 within the bore 25 prevents rotation of the tappet shaft 25 relative to the housing 24, thereby ensuring that rotation of adjuster shaft 22 results in actual lengthening of the tappet assembly 17.

In order to prevent the ingress of particles of dirt and debris into the sliding interface between the triblobular outer surface of the tappet shaft 25 and bore 24A. A seal 29 is provided between the tappet head 26 and housing 24.

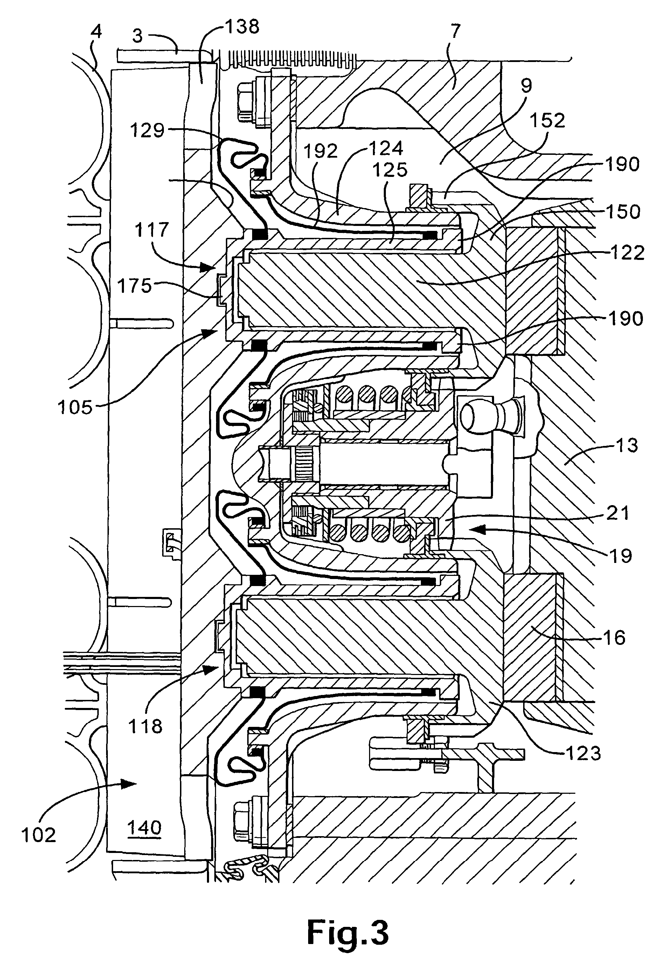

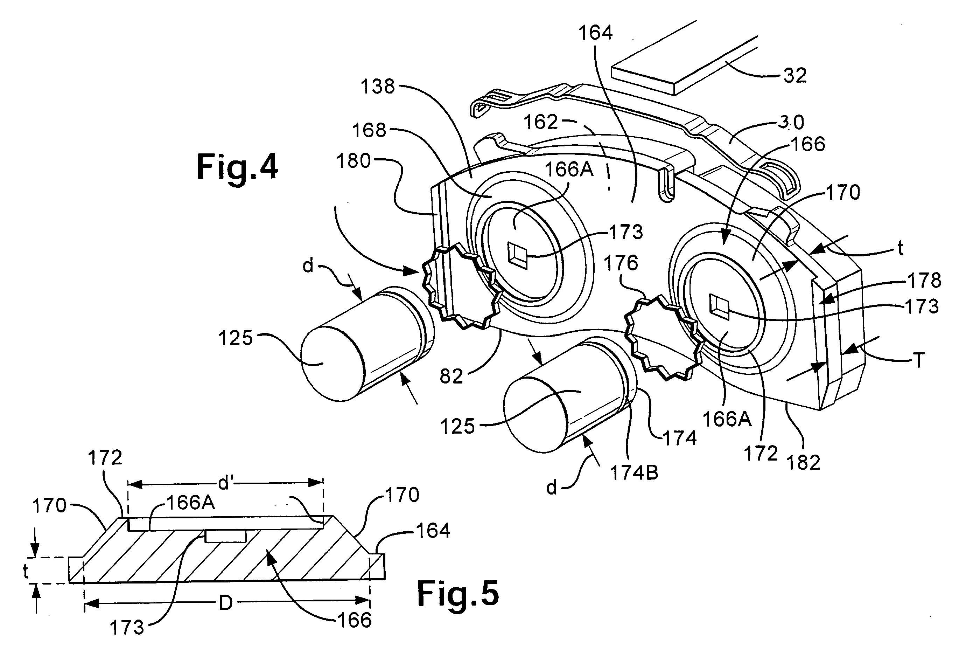

Referring to Figures 3 and 4 a force transmission device 105 according to an embodiment of the present invention is shown fitted within the chamber 9 of housing 7 of a disc brake of the known type disclosed above. The remaining parts of the disc brake that are identical with the prior art are designated by the same reference numerals and operate in the same way. That is to say, member 13 causes actuating thrust to be applied via the tappet assemblies 117 and 118 to a directly actuated friction element 102. The tappet assemblies 117 and 118 are adjusted by adjuster mechanism 19 as in the prior art.

It should be noted that tappet housing 124 of the present invention no longer comprises a trilobular bush arranged to receive and guide a tappet shaft along its axial length. Thus, the prior art guidance for tappet assemblies 117 and 118 is no longer present. Instead, end 150 of each tappet assembly proximate actuating member 13 in use is guided by the interface of the gear ring 152 of adjuster shaft 122 with the housing 124. Thus, no contact between housing 124 and the tappet shaft 125 need occur. The opposite end of each tappet assembly 117 and 118 is guided due to location with a formation provided on backplate 138 of the friction element 102.

Figures 4 and 5 show a brake pad backplate 138 according to the present invention being generally planar and having a friction material surface 162 on one side and a loading surface 164 on an opposite side. The loading face includes two local load spreading features in the form of raised bosses 166 and 168, both being identical. It should be noted that the top of the boss (when considering Figure 5) has diameter d' which is smaller than the diameter D of the lower portion of the boss. Thus the boss is able to act as a load spreading feature.

Boss 166 is circular having an edge 170 that tapers towards the loading face 164.

Boss 166 further includes a feature in the form of a raised abutment 172. Abutment 172 is annular and has a diameter d' that is slightly larger than the diameter d of the end 174 of tappet shafts 125 and defines a surface 166A within it having a recessed square locating feature 173 at its centre.

The tappet ends 174 are both of substantially uniform circular cross section having diameter d and a square end projection 175 dimensioned to fit within recess 173.

End 174 of tappet shaft 125 includes an annular groove 174B. A resilient means in the form of a wavy spring 176 is assembled into groove 174B. The tappet shaft and wavy spring are then inserted into the recess formed by surface 166A and raised abutment 172 such that projection 175 fits within recess 173. This assembly process can either be achieved by moving the pad towards the tappet shaft 125, or alternatively by moving the tappet shaft towards the pad as will be further described below.

It should be noted that to remove the inner and outer friction element 102 of the prior art for example during servicing, they can be simply moved in a radial direction relative to the brake disc once the pad strap 32 has been removed.

However, the force transmission device of the present invention provides for an alternative method of assembling friction element backplates 138 either during initial assembly or during reassembly following servicing. Thus, in order to assemble a friction element backplate 138 in the outer position of the caliper, ie remote from the force transmission device, the friction element 102 has to be inserted in a radial direction and then subsequently moved in an axial direction, away from the brake disc 4, so as to engage the location of features of the backplate with further features on the inner face of the bridge.

The wavy spring 176 is designed as an interference push fit in the recess formed by surface 166A, and hence the wavy spring ensures that end 174 of the tappet shaft 125 remains in contact with surface 166A when the associated vehicle is in use.

In addition to providing an interference push fit, the wavy spring also allows a limited amount of radial movement of the brake pad relative to the tappet shaft 125 (provided some clearance is provided between location feature 173 and projection 175). In particular the resilient nature of the wavy spring can be used to damp the transmission of vibrations induced in the friction element.

Note that the wavy spring 176 is similar to proprietary components known as "tolerance rings". Thus, under certain circumstances it would be possible to design the piston and brake pad backplate to utilise "off the shelf" tolerance rings, rather than having a specific unique wavy spring.

In this case the wavy spring is received in groove 174B of tappet shaft 125 but in other embodiments the groove could be provided on the raised abutment 172.

It will be appreciated that since end 174 of the tappet shaft 125 is radially and circumferentially restrained by engagement with the backplate, the guidance provided by bore 24A of prior art devices is no longer needed.

Backplate 138 is generally arcuate having circumferential ends 178 and 180. Circumferential ends 178 and 180 may be locally thickened (T) when compared with the thickness (t) of the main portion of the backplate. This local thickening ensures that there is adequate engagement of the circumferential end with its associated carrier 3 even at the extremes of friction element and disc wear.

Similar local thickening (not shown) can be provided on a radially inner edge 182 of the backplate 138, where it abuts the associated carrier 3.

Similarly when backplate 138 is assembled in an inner position, ie in a position shown in Figure 3, it has to be first moved in a radially inward direction then in an axial direction away from the brake disc so that the location features of the backplate engage with the tappet shaft 125.

An alternative method of assembling the backplate 138 into a caliper is to firstly move the backplates in a radial direction such that the friction material 140 is proximate the brake disc surface, and then to apply the brake so that the tappet shafts 125 and the inner face of the bridge approach and engage with location features on the backplate thereby preventing escape of the pads during subsequent normal use of the vehicle.

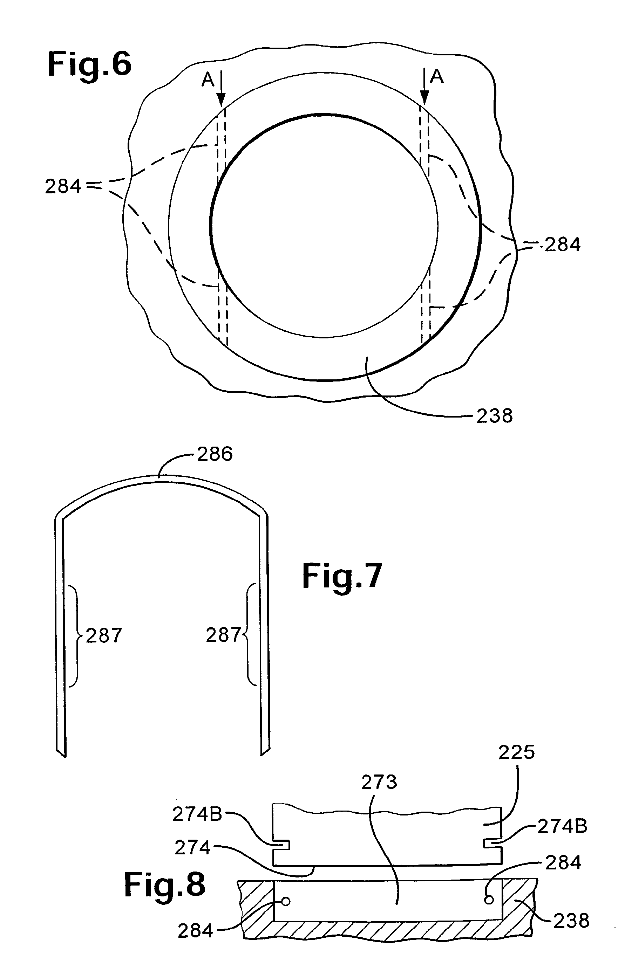

Consideration of figures 7 to 9 show an alternative tappet shaft 225 having an end 274 and grooves 274B. An alternative brake pad backplate 238 is provided which in this case includes cordially orientated holes 284. In this case the tappet shaft 225 is inserted into recess 273 following which the spring clip 286 is inserted in the direction of arrows A through holes 284 such that regions 287 sit within grooves 274B, thus retaining the piston to the pad. The grooves preferably do not extend around the entire circumference of the shaft 225 so that relative rotation of the shaft and backplate 238 is prevented when clip 286 is inserted.

In the aforesaid embodiments the abutments 172 and tappet ends have been circular. However, in other embodiments non-circular formations are employed. Such formations would thus be a substitute for projections 175 and grooves 274B in enabling the wear adjustment mechanism 19 to function properly. Any other suitable form of engagement that prevents relative rotation between the backplate 138 and tappet shaft 125 may also be employed.

It is possible to rely solely on the interface between the tappet shafts 125 and the backplate 138 to ensure that the tappet assemblies extend in response to wear of the friction material 140. However, it is also possible that once the backplate 138 is removed from the ends of the tappet shafts 125 that the tappet shafts may rotate and thereby go out of mutual synchronism during pad replacement, potentially leading to difficulties in fitting a replacement pad, and in achieving an even wear of the friction material during use of the disc brake. In order to prevent this, a further anti-rotation feature such as teeth 190 may be provided at the end of the tappet shaft 125 proximate actuating member 13 so as to engage a complementary formation (not shown) on the housing 124 when the tappet shaft 125 is in the retracted position with respect to the adjuster shaft 122 as illustrated in Figure 3. Since the pad 102 can only be replaced once the adjustment mechanism has been retracted, the anti-rotation feature provided by teeth 190 is only required to operate in this position.

It can be seen that the force transmission device of the present invention is provided with a secondary seal 192 that extends between housing 124 and the end of tappet shaft 125 proximate actuating member 13, in addition to primary seal 129. Secondary seal 192 is provided to prevent the ingress of certain debris into the force transmission device, should primary seal 129 fail.

It will be appreciated that the force transmission device of the present invention provides a number of advantages over the prior art. For example, the force transmission device may provide for improved operational efficiency due to the reduced number of sliding contact points. In addition, the cost of manufacturing the device may be reduced due to the requirement for fewer parts and the elimination of the need to machine both the tappet shaft and the bushing for the tappet shaft. Furthermore, the force transmission device of the present invention may provide additional savings in the manufacturing of cast backplates since only the contact area for locating the ends of the tappets require machining rather than a large area of the backplate in order to accommodate prior art tappet heads or spreader plates.

It should be appreciated that numerous changes may be made within the scope of the present invention as defined by the appended claims. For example, the force transmission device may be adapted for use with other adjuster mechanisms such as those disclosed in, for example, WO 99/49232 and WO 97/01045. The present invention may further be applied to disc brakes that are fluid or mechanically actuated rather than air actuated, and to non-floating caliper type disc brakes.

## Claims

1. A disc brake caliper comprising a housing (124) and a force transmission device (105) for a disc brake operable to move a friction element (102) of the brake into engagement with a rotary brake disc (4) along a first axis in response to a loading from a thrust member, the device being restrained from movement transverse to the first axis proximate a first end (150) engageable with the thrust member, **characterised in that** the force transmission device is guided only by the housing at the first end, and **in that** a second end (174) is engageable with the friction element.

2. A disc brake caliper according to claim 1 wherein the second end is remote from the first, the second end being provided with a formation (175,274B) to engage a friction element and restrict relative movement therebetween in a direction transverse the first axis.

3. A disc brake caliper according to claim 1 or claim 2 wherein the housing restrains movement transverse the first axis at the first end.

4. A disc brake caliper according to any preceding claim wherein the device comprises at least one tappet (117,118).

5. A disc brake caliper according to claim 4 wherein the tappet is extensible.

6. A disc brake caliper according to claim 5 wherein the tappet is capable of extending by virtue of relative rotation of a tappet shaft (125) and adjuster shaft (122).

7. A disc brake caliper according to claim 5 or claim 6 when dependent on claim 2 wherein the formation (175,274B) is capable of restricting the rotation of one element of the tappet to permit the tappet to extend.

8. A disc brake caliper according to claim 7 wherein the formation comprises complementary non-circular portions of friction element (173) and tappet (175).

9. A disc brake caliper according to any one of claims 5 and 7 wherein a co-operating formation (190) between the housing and tappet is provided to prevent relative rotation between the housing and one element of the tappet when in a retracted position.

10. A disc brake incorporating a disc brake caliper according to any one of claims 1 to 9.

## Patentansprüche

1. Scheibenbremssattel, der ein Gehäuse (124) und eine Kraftübertragungsvorrichtung (105) für eine Scheibenbremse umfasst, die zum Bewegen eines Reibelements (102) der Bremse in Eingriff mit einer Drehbremsscheibe (4) entlang einer ersten Achse als Reaktion auf eine Belastung von einem Schubglied betätigbar ist, wobei die Vorrichtung an einer quer zur ersten Achse verlaufenden Bewegung nahe einem ersten Ende (150), das mit dem Schubglied in Eingriff gebracht werden kann, gehindert wird, **dadurch gekennzeichnet, dass** die Kraftübertragungsvorrichtung nur durch das Gehäuse an dem ersten Ende geführt wird und dass ein zweites Ende (174) mit dem Reibelement in Eingriff gebracht werden kann.

2. Scheibenbremssattel nach Anspruch 1, wobei das zweite Ende von dem ersten Ende entfernt ist, wobei das zweite Ende mit einer Ausbildung (175, 274B) versehen ist, um ein Reibelement in Eingriff zu nehmen und eine Relativbewegung dazwischen in einer quer zur ersten Achse verlaufenden Richtung zu beschränken.

3. Scheibenbremssattel nach Anspruch 1 oder 2, wobei das Gehäuse eine quer zur ersten Achse verlaufende Bewegung am ersten Ende hemmt.

4. Scheibenbremssattel nach einem der vorhergehenden Ansprüche, wobei die Vorrichtung mindestens einen Stößel (117, 118) umfasst.

5. Scheibenbremssattel nach Anspruch 4, wobei der Stößel ausziehbar ist.

6. Scheibenbremssattel nach Anspruch 5, wobei der Stößel dank einer relativen Drehung eines Stößelschafts (125) und Einstellschafts (122) ausgezogen werden kann.

7. Scheibenbremssattel nach Anspruch 5 oder 6, sofern von Anspruch 2 abhängig, wobei die Ausbildung (175, 274B) die Drehung eines Elements des Stößels beschränken kann, um ein Ausziehen des Stößels zu gestatten.

8. Scheibenbremssattel nach Anspruch 7, wobei die Ausbildung komplementäre, nicht kreisförmige Teile eines Reibelements (173) und Stößels (175) umfasst.

9. Scheibenbremssattel nach einem der Ansprüche 5 und 7, wobei eine Zusammenwirkungsausbildung (190) zwischen dem Gehäuse und dem Stößel vorgesehen ist, um eine relative Drehung zwischen dem Gehäuse und einem Element des Stößels, wenn er sich in der zurückgezogenen Position befindet, zu verhindern.

10. Scheibenbremse, die einen Schreibenbremssattel nach einem der Ansprüche 1 bis 9 enthält.

## Revendications

1. Etrier de frein à disque comprenant un logement (124) et un dispositif de transmission de force (105) destiné à un frein à disque agissant pour déplacer un élément de friction (102) du frein pour le mettre en prise avec un disque de frein rotatif (4) le long d'un premier axe en réponse à une charge exercée par un élément de poussée, le mouvement du dispositif étant empêché dans le sens transversal par rapport au premier axe à proximité d'une première extrémité (150) qui est en prise avec l'élément de poussée, **caractérisé en ce que** le dispositif de transmission de force est guidé seulement par le logement à la première extrémité, et **en ce qu'**une deuxième extrémité (174) est en prise avec l'élément de friction.

2. Etrier de frein à disque selon la revendication 1, dans lequel la deuxième extrémité est distante de la première, la deuxième extrémité étant pourvue d'une formation (175,274B) pour la mettre en prise avec un élément de friction et pour empêcher le mouvement relatif entre les deux dans une direction transversale au premier axe.

3. Etrier de frein à disque selon la revendication 1 ou 2, dans lequel le logement empêche le mouvement transversal par rapport au premier axe à la première extrémité.

4. Etrier de frein à disque selon l'une quelconque des revendications précédentes, dans lequel le dispositif comprend au moins un poussoir (117,118).

5. Etrier de frein à disque selon la revendication 4, dans lequel le poussoir est extensible.

6. Etrier de frein à disque selon la revendication 5, dans lequel le poussoir est capable d'une extension en raison de la rotation relative d'une tige de poussoir (125) et d'une tige de compensateur (122).

7. Etrier de frein à disque selon la revendication 5 ou la revendication 6 quand celle-ci est dépendante de la revendication 2, dans lequel la formation (175,247B) est capable d'empêcher la rotation d'un élément du poussoir pour permettre l'extension de celui-ci.

8. Etrier de frein à disque selon la revendication 7, dans lequel la formation comprend des parties complémentaires non circulaires de l'élément de friction (173) et du poussoir (175).

9. Etrier de frein à disque selon l'une quelconque des revendications 5 et 7, dans lequel une formation coopérante (190) est montée entre le logement et le poussoir pour prévenir la rotation relative entre le logement et un élément du poussoir quand celui-ci est en position rétractée.

10. Frein à disque comprenant un étrier de frein à disque selon l'une quelconque des revendications 1 à 9.
